# EUROPEAN PATENT APPLICATION

(11) **EP 3 312 510 A1**
(43) Date of publication of application: **25.04.2018**
(21) Application number: 17196198.0
(22) Date of filing: 12.10.2017
(51) Int. Cl.: F23R 3/34, F23R 3/00, F23R 3/28, F02C 7/228

(54) **COMBUSTOR ASSEMBLY WITH AIR SHIELD FOR A RADIAL FUEL INJECTOR**

(30) Priority: 24.10.2016 US 201615331961
(71) Applicant: General Electric Company, Schenectady, NY 12345 (US)
(72) Inventor: Daniel, Benjamin Lamar, Greenville, SC South Carolina 29615 (US)
(74) Representative: Lee, Brenda

(57) **Abstract**

A combustor 14 includes a combustion liner 36 at least partially surrounded by a flow sleeve 44 and an impingement sleeve 46 and an axial expansion joint 58 defined between an aft end 60 of the flow sleeve 44 and a forward end 62 of the impingement sleeve 46. A radial fuel injector 50 extends radially through the impingement sleeve 46 and at least partially through the combustion liner 36 and the radial fuel injector 50 is fluidly coupled to a fuel conduit 52 that extends across the expansion joint 58. The combustor 14 further includes an air shield assembly 100 having a forward end 62 slideably connected to the flow sleeve 44, an aft end 60 rigidly connected to at least one of the combustion liner 36, the radial fuel injector 50 and the impingement sleeve 46, and a bridge member 106. The bridge member 106 at least partially encloses the fuel conduit 52 and connects the forward end 102 of the air shield assembly 100 to the aft end 104 of the air shield assembly 100.

## Description

### FIELD

The present disclosure generally relates to a combustor for a gas turbine engine. More particularly, the present disclosure relates to combustor assembly including an air shield for a radial or axially offset fuel injector.

### BACKGROUND

A gas turbine engine generally includes a compressor section, a combustion section, and a turbine section. The compressor section progressively increases the pressure of the air entering the gas turbine engine and supplies this compressed air to the combustion section. The compressed air and a fuel (e.g., natural gas) mix within the combustion section before burning in one or more combustion chambers to generate high pressure and high temperature combustion gases. The combustion gases flow from the combustion section into the turbine section where they expand to produce mechanical rotational energy. For example, expansion of the combustion gases in the turbine section may rotate a rotor shaft connected, e.g., to a generator to produce electricity.

The combustion section typically includes a plurality of annularly arranged combustors, each of which receives compressed air from the compressor section. Each combustor may include a liner positioned within a combustor casing. The liner at least partially defines a combustion chamber having a primary combustion zone and a secondary combustion zone positioned downstream from the primary combustion zone. One or more fuel nozzles may supply the fuel to each of the primary combustion zones. Furthermore, one or more radial fuel injectors, axially offset or axially staged from the one or more fuel nozzle(s) and positioned downstream from the one or more fuel nozzles may supply the a secondary fuel and air mixture to the secondary combustion zone.

A tube or conduit may be used to supply fuel to a respective radial fuel injector. A first or upstream end of the tube may be rigidly connected to a casing structure, a fuel supply or to a flow sleeve which at least partially surrounds the liner. A second end of the tube may be rigidly connected to the fuel injector which is connected to an impingement sleeve which also partially surrounds the a portion of the liner. An expansion joint is defined between the flow sleeve and the impingement sleeve. As the combustor transitions through various thermal conditions, there may be relative axial and/or radial movement between the flow sleeve and the impingement sleeve at the expansion joint, thereby placing a mechanical load on the tube.

### BRIEF DESCRIPTION

Aspects and advantages are set forth below in the following description, or may be obvious from the description, or may be learned through practice.

One embodiment of the present disclosure is a combustor assembly. The combustor assembly includes a combustion liner that is at least partially surrounded by a flow sleeve and an impingement sleeve. An axial expansion joint is defined between an aft end of the flow sleeve and a forward end of the impingement sleeve. A radial fuel injector extends radially through the impingement sleeve and at least partially through the combustion liner. The radial fuel injector is fluidly coupled to a fuel conduit that extends across the expansion joint. The combustor assembly further includes an air shield assembly. The air shield assembly includes a forward end that is slideably connected to the flow sleeve, an aft end that is rigidly connected to at least one of the combustion liner, the radial fuel injector and the impingement sleeve, and a bridge member that connects the forward end of the air shield assembly to the aft end of the air shield assembly. The bridge member extends across the expansion gap and the fuel conduit is at least partially disposed within the bridge member.

Another embodiment of the present disclosure is a combustor air shield assembly. The combustor air shield assembly includes a base including a forward bracket, an aft bracket and a base bridge member structurally linking the forward bracket to the aft bracket and a cap that includes a forward sleeve, an injector cover and a cap bridge member structurally linking the forward sleeve to the injector cover. The base bridge member, the cap bridge member, the air shield and the injector cover define an air flow passage therein.

Those of ordinary skill in the art will better appreciate the features and aspects of such embodiments, and others, upon review of the specification.

### BRIEF DESCRIPTION OF THE DRAWINGS

A full and enabling disclosure of the of various embodiments, including the best mode thereof to one skilled in the art, is set forth more particularly in the remainder of the specification, including reference to the accompanying figures, in which:
FIG. 1 is a functional block diagram of an exemplary gas turbine that may incorporate various embodiments of the present disclosure;
FIG. 2 is a simplified cross-section side view of an exemplary combustor as may incorporate various embodiments of the present disclosure;
FIG. 3 is a cross sectioned view of a portion of an exemplary combustor according to at least one embodiment of the present disclosure;
FIG. 4 is an exploded perspective view of an exemplary air shield assembly according to at least one embodiment of the present disclosure;
FIG. 5 is a side view of a portion of the combustor as shown in FIG. 3, including an exemplary air shield assembly according to at least one embodiment of the present disclosure;
FIG. 6 is a top view of the portion of the combustor as shown in FIG. 5, according to at least one embodiment of the present invention; and
FIG. 7 is an enlarged cross sectional side view of a portion of a first end of the air shield assembly taken along section line A-A as illustrated in FIG. 5, according to at least one embodiment of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

As used herein, the terms "first," "second," and "third" may be used interchangeably to distinguish one component from another and are not intended to signify location or importance of the individual components. The terms "upstream" and "downstream" refer to the relative direction with respect to fluid flow in a fluid pathway. For example, "upstream" refers to the direction from which the fluid flows, and "downstream" refers to the direction to which the fluid flows. The term "radially" refers to the relative direction that is substantially perpendicular to an axial centerline of a particular component, the term "axially" refers to the relative direction that is substantially parallel and/or coaxially aligned to an axial centerline of a particular component, and the term "circumferentially" refers to the relative direction that extends around the axial centerline of a particular component.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Each example is provided by way of explanation, not limitation. In fact, it will be apparent to those skilled in the art that modifications and variations can be made without departing from the scope or spirit thereof. For instance, features illustrated or described as part of one embodiment may be used on another embodiment to yield a still further embodiment. Thus, it is intended that the present disclosure covers such modifications and variations as come within the scope of the appended claims and their equivalents. Although exemplary embodiments of the present disclosure will be described generally in the context of a combustor for a land based power generating gas turbine for purposes of illustration, one of ordinary skill in the art will readily appreciate that embodiments of the present disclosure may be applied to any style or type of combustor for a turbomachine and are not limited to combustors or combustion systems for land based power generating gas turbines unless specifically recited in the claims.

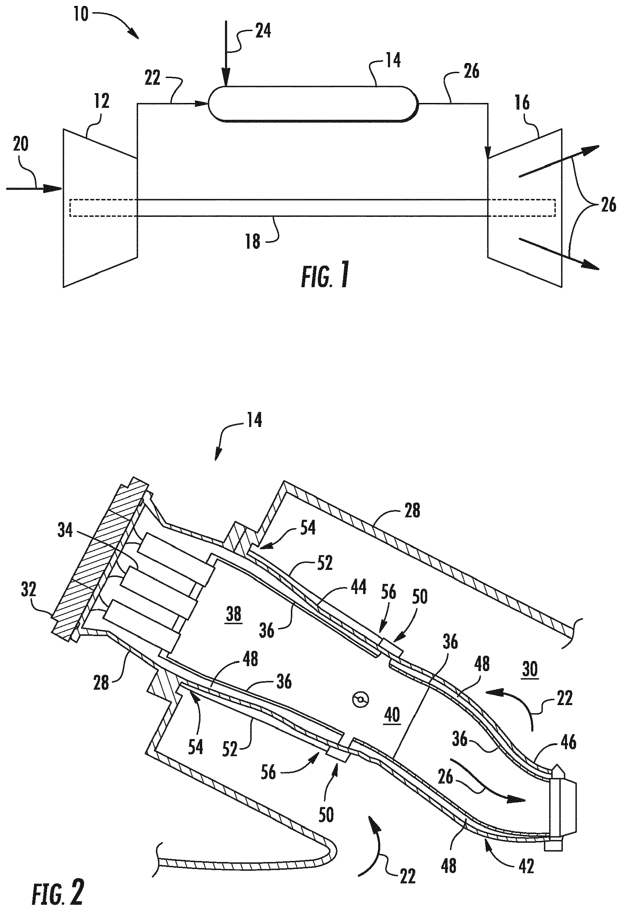

Referring now to the drawings, FIG. 1 illustrates a schematic diagram of an exemplary gas turbine 10. The gas turbine 10 generally includes a compressor 12, at least one combustor 14 disposed downstream of the compressor 12 and a turbine 16 disposed downstream of the combustor 14. Additionally, the gas turbine 10 may include one or more shafts 18 that couple the compressor 12 to the turbine 16.

During operation, air 20 flows into the compressor 12 where the air 20 is progressively compressed, thus providing compressed or pressurized air 22 to the combustor 14. At least a portion of the compressed air 22 is mixed with a fuel 24 within the combustor 14 and burned to produce combustion gases 26. The combustion gases 26 flow from the combustor 14 into the turbine 16, wherein energy (kinetic and/or thermal) is transferred from the combustion gases 26 to rotor blades (not shown), thus causing shaft 18 to rotate. The mechanical rotational energy may then be used for various purposes such as to power the compressor 12 and/or to generate electricity. The combustion gases 26 may then be exhausted from the gas turbine 10.

FIG. 2 provides a cross sectioned side view of an exemplary combustor as may incorporate various embodiments of the present disclosure. As shown in FIG. 2, the combustor 14 may be at least partially surrounded by an outer casing 28 such as a compressor discharge casing. The outer casing 28 may at least partially define a high pressure plenum 30 that at least partially surrounds various components of the combustor 14. The high pressure plenum 30 may be in fluid communication with the compressor 12 (FIG. 1) so as to receive a portion of the compressed air 22 therefrom. An end cover 32 may be coupled to the outer casing 28. One or more fuel nozzles 34 may extend axially downstream from the end cover 32. One or more combustion liners or ducts 36 may at least partially define a primary combustion chamber or zone 38 downstream from the one or more fuel nozzles 34 and/or may at least partially define a secondary combustion zone 40 axially offset and downstream from the primary combustion zone 38.

In particular embodiments, the combustion liner 36 is at last partially circumferentially surrounded by an outer sleeve 42. The outer sleeve 42 may be formed as a single component or formed by multiple sleeve segments such as by a flow sleeve 44 and an impingement sleeve 46 which is slideably engaged with the flow sleeve 44 to allow for axial relative movement therebetween. The flow sleeve 44 and the impingement sleeve 46 are radially spaced from the combustion liner 36 so as to define a cooling flow passage 48 therebetween. The impingement sleeve 46 and/or the flow sleeve 44 may define a plurality of inlets or holes (not shown) which provide for fluid communication between the cooling flow passage 48 and the high pressure plenum 30.

In various embodiments, as shown in FIG. 2, the combustor 14 includes at least one radial or axially staged fuel injector 50 axially offset from and disposed downstream from the fuel nozzle(s) 34. The radial fuel injector 50 extends radially through the impingement sleeve 46, the cooling flow passage 48 and at least partially through the combustion liner 36. In particular embodiments, the combustor 14 includes a plurality of radial fuel injectors 50 annularly arranged about the combustion liner 36 and the impingement sleeve 46.

In one embodiment, at least one radial fuel injector 50 is rigidly connected to at least one of the impingement sleeve 46 and the combustion liner 36. The radial fuel injector(s) 50 provides a secondary fuel and air mixture to the secondary combustion zone 40 defined within the combustion liner 36 downstream from the fuel nozzle(s) 34 and/or the primary combustion zone 38.

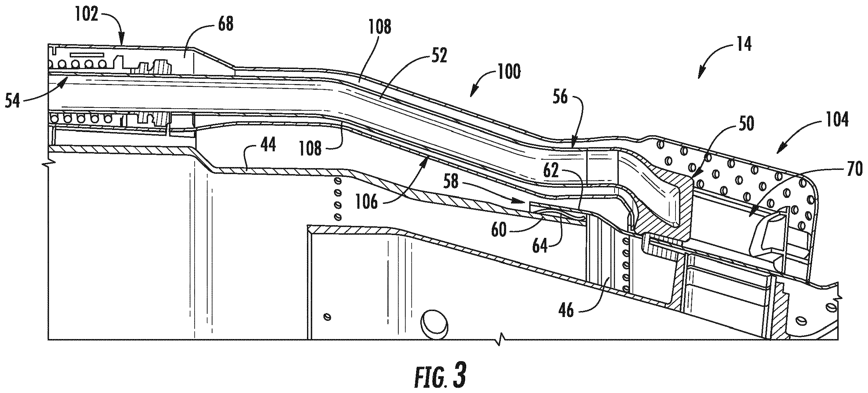

FIG. 3 provides a cross sectioned side view of a portion of an exemplary combustor 14 according to at least one embodiment of the present disclosure. In various embodiments, as shown in FIGS. 2 and 3 collectively, the combustor 14 includes at least one fuel conduit 52 which provides fuel to the radial fuel injector(s) 50. In particular embodiments, an upstream or forward end 54 of the fuel conduit 52 is fluidly connected to a fuel supply or source (not shown) and an aft or downstream end 56 of the fuel conduit 52 is fixedly connected to the radial fuel injector 50.

In particular embodiments, as shown in FIG. 3, an expansion joint 58 is defined between an aft end 60 of the flow sleeve 44 and a forward end 62 of the impingement sleeve 46. As shown, the aft end 60 of the flow sleeve 44 is seated within and/or axially overlaps with the forward end 62 of the impingement sleeve 46. A radial or hula seal 64 may be disposed or extend radially between the aft end 60 of the flow sleeve 44 and the forward end 62 of the impingement sleeve 46 to provide radial support to the impingement sleeve 46 while providing for axial sliding engagement between the flow sleeve 44 and the impingement sleeve 46, thus allowing the flow sleeve 44 and the impingement sleeve 46 to expand and contract axially at the expansion joint 58 as the combustor 14 transitions through various thermal conditions.

In various embodiments, as shown in FIG. 3, the combustor 14 includes an air shield assembly 100. A forward end 102 of the air shield assembly 100 is connected to the flow sleeve 44 and an aft end of the air shield assembly is rigidly connected to at least one of the radial fuel injector 50, the impingement sleeve 46 and the combustion liner 44. A bridge portion 106 of the air shield assembly 100 extends between and rigidly connects the forward end 102 to the aft end 104. The air shield assembly 100 encases or at least partially encases or circumferentially surrounds the fuel conduit 52 and at least a portion of the radial fuel injector 50. An air flow passage 108 is defined within the air shield assembly 100. The fuel conduit 50 extends through and is surrounded by the air flow passage 108. During operation, compressed air may be directed through the air flow passage 68 to purge the air flow passage 108 and/or to provide compressed air to the radial fuel injector 50.

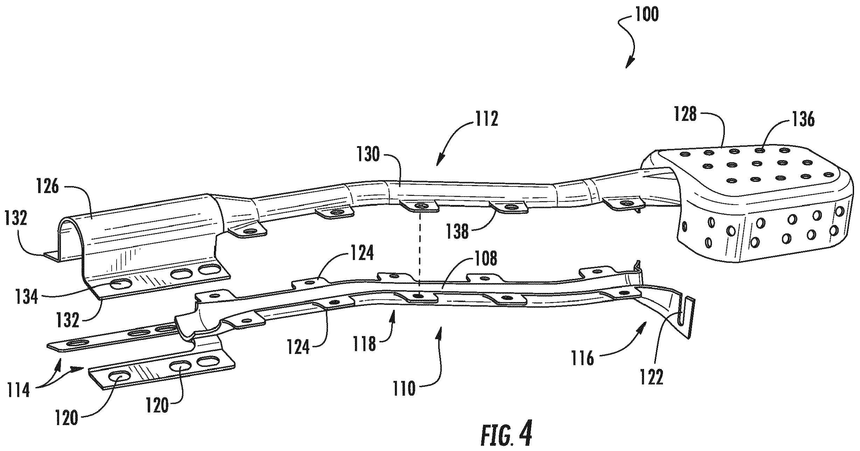

FIG. 4 provides an exploded view of an exemplary air shield assembly 100 according to at least one embodiment of the present disclosure. In particular embodiments, as shown in FIG. 4, the air shield assembly 100 includes a base 110 and a cap 112. The base 110 includes a forward bracket or flange 114, an aft bracket or flange 116 and a base bridge member 118 having a semi annular shape. The base bridge member 118 extends from and structurally links the forward bracket 114 to the aft bracket 116. In particular embodiments, the base bridge member 118 is rigid or inflexible. The base bridge member 118 at least partially defines the air flow passage 108.

As shown in FIG. 4, the forward bracket 114 is axially oriented. In particular embodiments, the forward bracket 114 defines at least one fastener hole 120. The fastener hole(s) 120 may be axially elongated. In particular embodiments, the aft bracket 116 is radially oriented and includes one or more radially oriented slots or openings 122. In at least one embodiment, the base 110 includes at least one tab or clip 124 defined along the base bridge member 110. In particular embodiments, the base 110 includes a plurality of tabs 124 positioned along opposing sides of the base bridge member 110.

In particular embodiments, as shown in FIG. 4, the cap 112 includes a forward sleeve 126 having a semi annular shape, an injector cover 128 and a cap bridge member 130 having a semi annular shape. The cap bridge member 130 extends from and structurally links the forward sleeve 126 to the injector cover 128. In particular embodiments, the cap bridge member 122 is rigid or inflexible. The forward sleeve 126, cap bridge member 130 and the injector cover 128 at least partially defines the air flow passage 108 (FIG. 3). The injector cover 128 at least partially or entirely covers an inlet 70 (FIG. 3) of the radial fuel injector 50.

In particular embodiments, as shown in FIG. 4, the forward sleeve 126 defines at least one flange 132. The flange 132 defines at least one fastener hole 134. The fastener hole 134 may be axially elongated and radially and axially aligned with the fastener hole 120 of the forward bracket 114 of the base 110.

In particular embodiments, the injector cover 128 includes one or more apertures 136. In operation, the aperture(s) 136 may provide for fluid communication between the high pressure plenum 30 (FIG. 2) and the radial fuel injector 50. In at least one embodiment, the cap 112 includes at least one tab or clip 138 defined along the cap bridge member 130. In particular embodiments, the cap 112 includes a plurality of tabs 138 positioned along opposing sides of the cap bridge member 130.

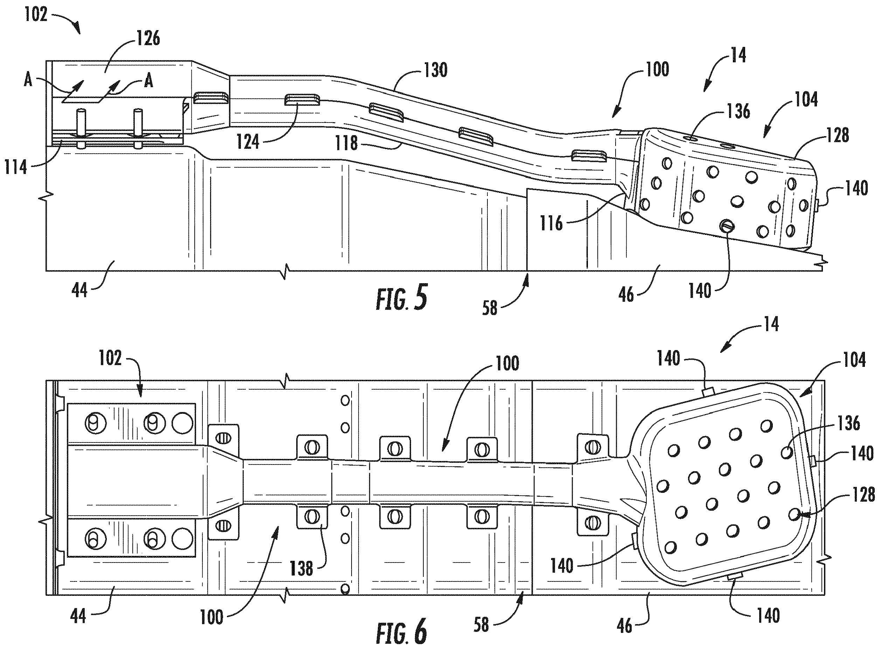

FIG. 5 provides a side view of a portion of the combustor 14 as shown in FIG. 3 with the air shield assembly 100 mounted, according to at least one embodiment of the present disclosure. FIG. 6 provides a top view of the portion of the combustor 14 as shown in FIG. 5 with the air shield assembly 100 mounted, according to at least one embodiment of the present disclosure. As shown in FIGS. 5 and 6 collectively, the forward end 102 of the air shield assembly 100 including the forward bracket 114 and the forward sleeve 126 is connected to the flow sleeve 44 while the aft end 104 of the air shield assembly 100 including the aft bracket 116 and the injector cover 128 is connected to the radial fuel injector 50 as shown in FIG. 3. The injector cover 128 may be connected to the radial fuel injector 50 (FIG. 3) via one or more fasteners 140. The base bridge member 118 and the cap bridge member 130 may be connected together via the tabs 124, 138 and/or via mechanical fasteners.

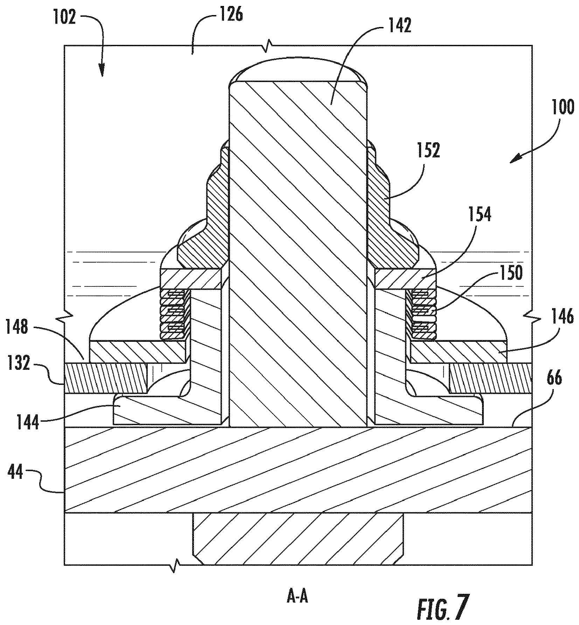

In various embodiments, the first end 102 of the air shield assembly 100 may be slideably attached to the flow sleeve 44. FIG. 7 provides an enlarged cross sectional side view of a portion of the first end 102 of the air shield assembly 100 and a portion of the flow sleeve 44 taken along section line A-A as illustrated in FIG. 5, according to at least one embodiment of the present disclosure.

In particular embodiments, as shown in FIG. 7, a threaded stud or bolt 142 may extend radially through and/or radially outwardly from the flow sleeve 44 and through the fastener hole 134 of the flange 132 of the forward sleeve 126. In particular embodiments, the stud 142 extends radially through a boss or nut 144 disposed along the outer surface or side 66 of the flow sleeve 44. In particular embodiments, the stud 142 is threadingly engaged with the boss or nut 144. The boss 144 may extend at least partially radially through the respective fastener hole 134 of the forward sleeve 126.

In particular embodiments, the stud 142 extends radially through a first washer or collar 146 which is disposed along an outer surface 148 of the flange 132 of the forward sleeve 126. A spring or bushing 150 such as a wave or compression spring is disposed radially between a nut 152 and the first washer 146. In particular embodiments, a second washer 154 may be disposed between the spring 150 and the nut 152.

When assembled, the nut 152 may be tightened such that the spring 150 exerts a compressive force against the first washer 146. The compressive force is transferred to the outer surface 148 of the flange 132 of the forward sleeve 126 to restrict or prevent radial movement of the first end 102 of the air shield assembly 100 but still allow for axial or sliding movement of the air shield assembly 100 across the outer surface 66 of the flow sleeve 44 when there is relative movement, for example due to thermal expansion and contraction, between the flow sleeve 44 and the impingement sleeve 46 and/or the combustion liner 44.

This written description uses examples to disclose the invention, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

Various aspects and embodiments of the present invention are defined by the following numbered clauses:
1. A combustor assembly, comprising:
   a combustion liner at least partially surrounded by a flow sleeve and an impingement sleeve, wherein an axial expansion joint is defined between an aft end of the flow sleeve and a forward end of the impingement sleeve;
   a radial fuel injector extending radially through the impingement sleeve and at least partially through the combustion liner, wherein the radial fuel injector is fluidly coupled to a fuel conduit that extends across the expansion joint; and
   an air shield assembly comprising a forward end slideably connected to the flow sleeve, an aft end rigidly connected to at least one of the combustion liner, the radial fuel injector and the impingement sleeve, and a bridge member that connects the forward end of the air shield assembly to the aft end of the air shield assembly and extends across the expansion gap, wherein the fuel conduit is at least partially disposed within the bridge member.
2. The combustor assembly as in clause 1, wherein the forward end of the air shield assembly comprises a forward sleeve, wherein the forward sleeve at least partially defines an air flow passage around a portion of the fuel conduit.
3. The combustor assembly as in any preceding clause, wherein the bridge member at least partially defines an air flow passage around a portion of the fuel conduit.
4. The combustor assembly as in any preceding clause, wherein the aft end of the air shield assembly comprises an injector cover in fluid communication with the air flow passage, wherein the injector cover at least partially surrounds an inlet to the radial fuel injector.
5. The combustor assembly as in any preceding clause, wherein the aft end of the air shield assembly comprises an injector cover defining a plurality of apertures, wherein the plurality of apertures provide for fluid flow through the injector cover into an inlet of the radial fuel injector.
6. The combustor assembly as in any preceding clause, wherein the forward end of the air shield assembly comprises a forward sleeve, the combustor assembly further comprising a threaded stud or bolt extending radially outwardly from the flow sleeve and through a fastener hole of a flange of the forward sleeve, a first washer disposed along an outer surface of the flange of the forward sleeve and a spring disposed radially between a nut and the first washer.
7. The combustor assembly as in any preceding clause, further comprising a boss disposed along an outer surface of the flow sleeve, wherein the stud extends radially through the boss.
8. The combustor assembly as in any preceding clause, further comprising a second washer disposed between the spring and the nut.
9. The combustor assembly as in any preceding clause, wherein the spring comprises a wave spring.
10. The combustor assembly as in any preceding clause, wherein the air shield assembly comprises a base and a cap, wherein the base includes a forward bracket, an aft bracket and a base bridge member and the cap includes a forward sleeve, an injector cover and a cap bridge member structurally linking the forward sleeve to the injector cover, wherein the base bridge member and the cap bridge member define the bridge member of the air shield assembly.
11. The combustor assembly as in any preceding clause, wherein the base bridge member and the cap bridge member at least partially define the air flow passage.
12. The combustor assembly as in any preceding clause, wherein the aft bracket is radially oriented and includes one or more radially oriented slots or openings.
13. The combustor assembly as in any preceding clause, wherein at least one of the base and the cap includes at least one tab.
14. A combustor air shield assembly, comprising:
   a base including a forward bracket, an aft bracket and a base bridge member structurally linking the forward bracket to the aft bracket; and
   a cap including a forward sleeve, an injector cover and a cap bridge member structurally linking the forward sleeve to the injector cover;
   wherein the base bridge member, the cap bridge member, the air shield and the injector cover define an air flow passage therein.
15. The combustor air shield assembly as in any preceding clause, wherein the aft bracket is radially oriented and includes one or more radially oriented slots or openings.
16. The combustor air shield assembly as in any preceding clause, wherein at least one of the base bridge member and the cap bridge member includes at least one clip, wherein the clip couples the base bridge member to the cap bridge member.
17. The combustor air shield assembly as in any preceding clause, further comprising a threaded stud or bolt extending radially through a fastener hole of a flange of the forward sleeve, a first washer disposed along an outer surface of the flange of the forward sleeve and a spring disposed radially between a nut and the first washer.
18. The combustor air shield assembly as in any preceding clause, further comprising a boss, wherein the stud extends radially through the boss.
19. The combustor air shield assembly as in any preceding clause, further comprising a second washer disposed between the spring and the nut.

The combustor air shield assembly as in any preceding clause, wherein the spring comprises a wave spring.

## Claims

1. A combustor (14), comprising:
a combustion liner (36) at least partially surrounded by a flow sleeve (44) and an impingement sleeve (46), wherein an axial expansion joint (58) is defined between an aft end (60) of the flow sleeve (44) and a forward end (62) of the impingement sleeve (46);
a radial fuel injector (50) extending radially through the impingement sleeve (46) and at least partially through the combustion liner (36), wherein the radial fuel injector (50) is fluidly coupled to a fuel conduit (52) that extends across the expansion joint (58); and
an air shield assembly (100) comprising a forward end (102) slideably connected to the flow sleeve (44), an aft end (104) rigidly connected to at least one of the combustion liner (36), the radial fuel injector (50) and the impingement sleeve (46), and a bridge member (106) that connects the forward end (102) of the air shield assembly (100) to the aft end (104) of the air shield assembly (100) and extends across the expansion joint (58), wherein the fuel conduit (52) is at least partially disposed within the bridge member (106).

2. The combustor (14) as in claim 1, wherein the forward end (102) of the air shield assembly (100) comprises a forward sleeve (126), wherein the forward sleeve (126) at least partially defines an air flow passage (108) around a portion of the fuel conduit (52).

3. The combustor (14) as in claim 1 or 2, wherein the bridge member (106) at least partially defines an air flow passage (108) around a portion of the fuel conduit (52).

4. The combustor (14) as in claim 3, wherein the aft end (104) of the air shield assembly (100) comprises an injector cover (128) in fluid communication with the air flow passage (108), wherein the injector cover (128) at least partially surrounds an inlet (70) to the radial fuel injector (50).

5. The combustor (14) as in any preceding claim, wherein the aft end (104) of the air shield assembly (100) comprises an injector cover (128) defining a plurality of apertures (136), wherein the plurality of apertures (136) provide for fluid flow through the injector cover (128) into an inlet (70) of the radial fuel injector (50).

6. The combustor (14) as in any preceding claim, wherein the forward end (102) of the air shield assembly (100) comprises a forward sleeve (126), the combustor (14) further comprising a threaded stud or bolt (142) extending radially outwardly from the flow sleeve (44) and through a fastener hole (134) of a flange of the forward sleeve (126), a first washer (146) disposed along an outer surface (148) of the flange (132) of the forward sleeve (126) and a spring (150) disposed radially between a nut (152) and the first washer (146).

7. The combustor (14) as in claim 6, further comprising a boss (144) disposed along an outer surface (66) of the flow sleeve (44), wherein the stud (142) extends radially through the boss (144).

8. The combustor (14) as in claim 6 or 7, further comprising a second washer (154) disposed between the spring (150) and the nut (152).

9. The combustor (14) as in claim 6, 7 or 8 wherein the spring (150) comprises a wave spring.

10. The combustor (14) as in claim 1, wherein the air shield assembly (100) comprises a base (110) and a cap (112), wherein the base (110) includes a forward bracket, an aft bracket (116) and a base bridge member (118) and the cap (112) includes a forward sleeve, an injector cover (128) and a cap bridge member (130) structurally linking the forward sleeve (126) to the injector cover (128), wherein the base bridge member (118) and the cap bridge member (130) define the bridge member (106) of the air shield assembly (100).

11. The combustor (14) as in claim 10 or 11, wherein the base bridge member (118) and the cap bridge member (130) at least partially define the air flow passage (108).

12. The combustor (14) as in claim 10 or 11 wherein the aft bracket (116) is radially oriented and includes one or more radially oriented slots or openings (122).

13. The combustor (14) as in claim 10, 11 or 12 wherein at least one of the base (110) and the cap (112) includes at least one tab (124).
